# EUROPEAN PATENT APPLICATION

(11) **EP 2 192 241 A2**
(43) Date of publication of application: **02.06.2010**
(21) Application number: 09252664.9
(22) Date of filing: 23.11.2009
(51) Int. Cl.: E03B 3/03

(54) **Water holding vessel**

(30) Priority: 26.11.2008 GB 0821605
(71) Applicant: Maragh, Dean Mohan, 929A Abbeydale Road Sheffield South Yorkshire S7 2QD (GB)
(72) Inventor: Maragh, Dean Mohan, 929A Abbeydale Road Sheffield South Yorkshire S7 2QD (GB)
(74) Representative: Lock, Howard John

(57) **Abstract**

A water holding vessel (10) comprising a main part (12) comprising a flexible material, the main part defining, or being capable of defining, a chamber (18) to hold the water, and mounting means (20, 120) to mount the vessel on a support. In one embodiment, the mounting means comprises a plurality of mounting members (20) spaced along the edge of the main part. In another embodiment, the mounting means comprises a mounting aperture (120) defined by the main part. The mounting aperture may be of a size to allow a user to put their head through the mounting aperture, so that the water holding vessel can be carried around the user's neck.

## Description

This invention relates to water holding vessels. More particularly, but not exclusively, this invention relates to water holding vessels for holding rain water.

Water butts are used in many gardens to store rainwater. The water butts can be arranged beneath a drain pipe from guttering on a roof, which directs rain water into the water butt. An outlet is provided near the base of the water butt, which has a connector to enable a hosepipe to be connected to the outlet to enable the rain water to be dispensed from the water butt, for example to water a garden.

According to one aspect of this invention, there is provided a water holding vessel comprising a main part comprising a flexible material, the main part defining, or being capable of defining, a chamber to hold the water, and mounting means to mount the vessel on a support.

In a first embodiment, the mounting means may comprise a plurality of spaced mounting members arranged around the main body. The main part may have an edge and the mounting means may be provided along the edge. Each mounting member may be configured to cooperate with a mounting formation. The mounting formations may be provided on the support. The water holding vessel may comprise a water butt.

A plurality of mounting formations may be provided on the support, and at least some of the mounting members may cooperate with a corresponding number of mounting formations to mount the vessel on the support.

At least some of the mounting members may be spaced uniformly from adjacent mounting members. At least some of the mounting formations may be spaced uniformly on the support.

The main part may comprise first and second opposed sheet members of the flexible material. The first and second sheet members may be separable from each other to define the chamber to hold the water. The first and second sheet members may be secured to each other along the edge regions, desirably by welding the first and second sheet members to each other along at least some of the edge regions. The mounting means may be provided along the edges of the first and second sheets members.

In one embodiment, the first and second sheet members may be attached to each other along a fold line. In another embodiment, the first and second sheet members may be discrete sheet members.

The mounting means may comprise first mounting portions on the edge of the first sheet member, and second mounting portions on the edge of the second sheet member. The first and second sheet members may be attached to each other so that the first mounting portions are aligned with respective second mounting portions.

Each mounting member may comprise a first mounting portion on the first sheet member, and a second mounting portion on the second sheet member. The first and second mounting portions of each mounting member may be attached to each other, example by welding.

Each of the first and second mounting portions may define respective first and second mounting apertures. The first and second mounting portions may be secured to each other such that the first and second mounting apertures are aligned with each other. The first and second mounting portions may be attached to each other by welding.

Alternatively, the mounting means may comprise a plurality of mounting members arranged along the edge of one of the first and second sheet members.

The support may be a wall, for example a wall of a building, to which the mounting formations are attached. Alternatively, the support may be a raised platform, and the mounting formations may be attached to the underside of the platform, so that the water holding vessel can hang downwardly therefrom. The platform may comprise decking.

In the first embodiment, the main part may define an inlet opening. An inlet connector may be provided at the inlet opening, to which a water feed conduit can be communicatively connected. The water feed conduit may comprise a pipe, which may be a flexible pipe, such as a hosepipe.

In the first embodiment, the main part may define an outlet opening. An outlet connector may be provided at the outlet opening, to which a water dispensing conduit can be communicatively connected, to allow water to be dispensed from the water holding vessel. The water dispensing conduit may comprise a pipe, which may be a flexible pipe, such as a hosepipe.

The inlet and outlet openings are preferably spaced from each other. The inlet opening may be defined in the first sheet member, and the outlet opening may be defined in the second sheet member. The inlet and outlet openings may be spaced from each other. The inlet opening may be adjacent a corner of the main part. The outlet opening may be adjacent an opposite corner of the main part.

The main part may be rectangular in configuration, having a pair of opposed longer edges, and a pair of opposed shorter edges. Four of the mounting members may be provided on each of the longer edges, and two of the mounting members may be provided on each of the shorter edges.

In a second embodiment, the mounting means may be a mounting aperture extending through the main part. The mounting aperture may be of a size to receive through it at least the head of a user, so that the user can carry the water holding vessel around the user's neck.

The main part may comprise a cushioning region to cushion the head of the user of the water holding vessel when the user is carrying the water holding vessel around the user's neck. A mounting formation may be provided on the support. The mounting formation may comprise a mounting structure on the support.

The mounting structure may have the configuration of a hook, at least in profile. The support may be a wall, for example a wall of a building, to which the mounting structure can be attached.

The main part may comprise a first region capable of defining the chamber to hold the water. The main part may comprise a second region isolated from the first region by sealed portions. The sealed portions may extend across the main part. The sealed portions may extend from the mounting means to the edge of the main part. The sealed portions may comprise welds.

The second region may comprise the cushioning region. The second region may be inflatable, and may define an inflation opening through which air to inflate the second region can pass.

An inflating member may be provided on the inflation opening. The inflating member may comprise a tube through which the user can blow to inflate the second region. A closure may be provided to close the opening and prevent leakage of air from the second region.

The main part may comprise first and second opposed sheet members of the flexible material. The first and second sheet members may be separable from each other to define the chamber to hold the water. The first and second sheet members may be attached to each other along the edge regions, desirably by welding the first and second sheet members to each other.

In the second embodiment, the main part may define an inlet opening. An inlet connector may be provided at the inlet opening, to which a water feed conduit can be communicatively connected. The water feed conduit may comprise a pipe, which may be a flexible pipe, such as a hosepipe.

In the second embodiment, the main part may define an outlet opening. An outlet connector may be provided at the outlet opening, to which a water dispensing conduit can be communicatively connected, to allow water to be dispensed from the water holding vessel. The water dispensing conduit may comprise a pipe, which may be a flexible pipe, such as a hosepipe.

The inlet opening may be defined in an upper region of the main part. The inlet opening may be defined adjacent the second region of the main part. The outlet opening may be defined in a lower region of the main part.

The main part of the water holding vessel of the second embodiment may be generally oval in configuration. If desired, the upper region of the main part may be narrower than the lower region of the main part.

The aperture may be generally oval in configuration. The upper region of the aperture may be narrower than the lower region of the aperture.

Embodiments of the invention will now be described by way of example only, with reference to the accompanying drawings, in which:
Figure 1 is a perspective view of the first embodiment of a water holding vessel;
Figure 2 is a front view of the water holding vessel shown in Figure 1;
Figure 3 is a rear view of the water holding vessel shown in Figure 1;
Figure 4 is a front view of a second embodiment of a water holding vessel.
Figure 5 shows a blank for forming a third embodiment;
Figure 6 is a perspective view of the third embodiment; and
Figure 7 shows a blank for forming a fourth embodiment.

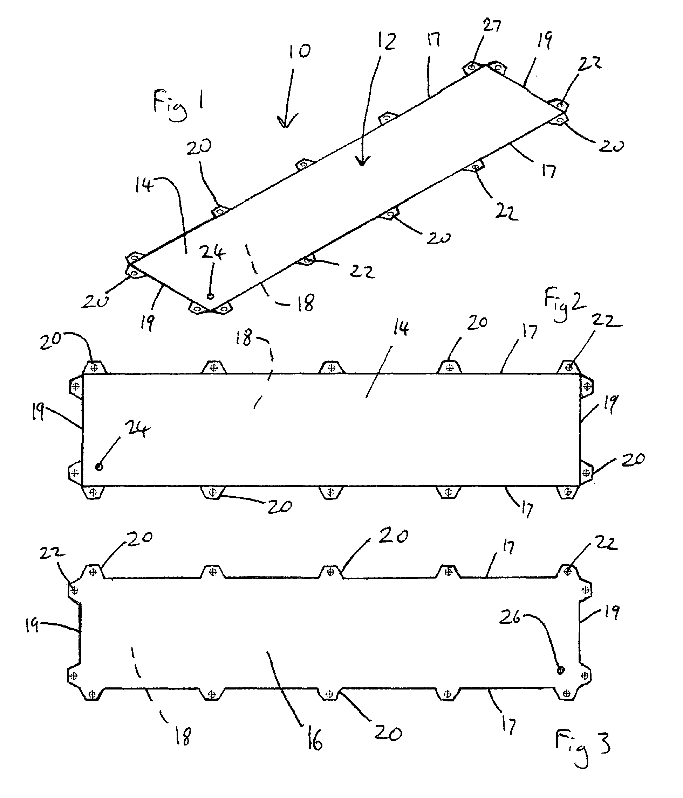

Referring to Figures 1 to 3, there is shown a first embodiment of a water holding vessel 10 in the form of a water butt. The water holding vessel 10 comprises a main part 12 formed of opposed first and second flexible water impermeable sheet members 14, 16 (see Figures 2 and 3) of a plastics material, such as PVC.

The main part 12 is rectangular in configuration having a pair of opposite long edges 17 and a pair of opposite short edges 19.

The first and second sheet members 14, 16 are welded to each other at their edge regions by, for example, high frequency welding. The first and second sheet members 14, 16 lie in close contact with each other when the water holding vessel 10 is empty, and can be separated from each other to define a chamber 18 between the first and second sheet members 14, 16 when the main part 12 is filled with water.

The water holding vessel 10 comprises mounting means comprising a plurality of mounting members in the form of a plurality of lugs 20, which are spaced from each other along the opposite edges. As can be seen, a plurality of the lugs 20 are spaced uniformly from each other along the long edges 17 by a first predetermined distance, and a plurality of the lugs 20 are spaced from each other along the short edges by second predetermined distance.

Each of the lugs 20 defines a mounting aperture 22 to cooperate with a mounting formation, such as in the form of a hook (not shown) to enable the water holding vessel 10 to be hung from a support. In a first embodiment, each of the lugs 20 comprises a first lug portion on the first sheet member 14, and a second lug portion on the second sheet member 16. Each of the first and second lug portions defines an aperture. Each lug 20 can be formed by bringing the first and second lug portions together with the aperture in the first lug portion being aligned with the aperture in the second portion, and welding the lug portions to one another.

Alternatively, the mounting means comprises a plurality of lugs 20 arranged along the edge of the second sheet member 16, so that when the first and second sheet members 14, 16 are welded together, the lugs 20 provide the mounting means.

The first sheet member 14 defines an inlet opening 24, into which water can be fed, for example from a supply of rainwater, such as guttering or the like. A suitable inlet connector (not shown) can be mounted on the first sheet member 14 at the inlet opening 24. The inlet connector can be any suitable connector, for example for connecting a hosepipe to the water holding vessel 10 to allow water to be fed therefrom.

The second sheet member 16 defines an outlet opening 26 which allows water in the water holding vessel 10 to be dispensed. A closable outlet connector (not shown) can be mounted on the second sheet member 16 at the outlet opening 26. The outlet connector can be any suitable connector for connecting a hosepipe to the water holding vessel 10 to allow water to be dispensed therefrom.

The lugs 20 allow the water holding vessel 10 to be supported from hooks on a suitable support. The water holding vessel would be hung from the hooks, such that the inlet aperture 24 is at the top.

Alternatively, the water holding vessel 10 could be hung from the underside of a platform, for example in the form of decking. This manner of supporting the water holding vessel 10 could be used if it is desired to hide the water holding vessel 10 from view, or if it is not possible to hang the water holding vessel 10 from a wall. With this arrangement, the water holding vessel 10 can be hung from the platform such that the first sheet member 14 is uppermost.

When the water holding vessel 10 is filled with rainwater, a hosepipe can be connected to the outlet connector on the outlet aperture 26. As the rainwater enters the water holding vessel 10, the first and second sheet members 14, 16 are separated from each other to define the chamber 18.

When the chamber 18 contains a sufficient amount of water, the outlet connector can be opened to allow water to be dispensed from the water holding vessel 10 of either hosepipe, for example, to water the user's garden.

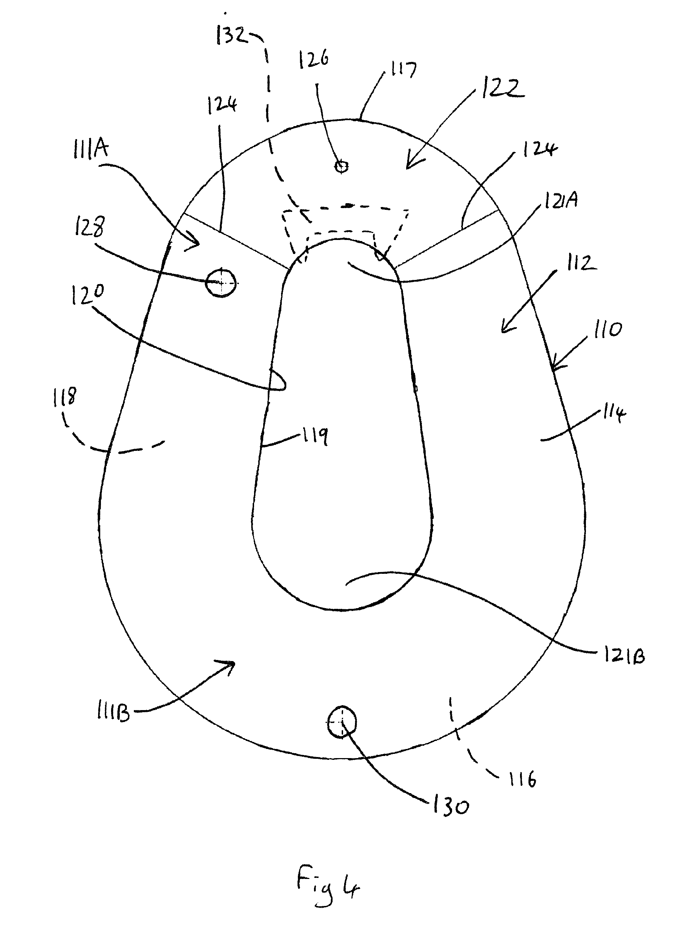

Referring to Figure 4, there is shown a second embodiment of the water holding vessel in the form of a water butt. In Figure 4, the water holding vessel is designated 110. The water holding vessel 110 is of a generally oval configuration having an upper region 111A and a lower region 111B, the upper region 111A being narrower than the lower region 111B.

The water holding vessel 110 comprises a main part 112 formed of opposed first and second sheet members 114, 116 of a flexible water impermeable plastics material, such as PVC. The second sheet member 116 is designated by a broken line to indicate that it is behind the first sheet member 114 in the view shown in Figure 4.

When the water holding vessel 110 is empty, the first and second sheet members 114, 116 lie in close contact with each other but, when the water holding vessel 110 is filled with water, the first and second sheet members 114, 116 are separated from each other to define a chamber 118 between the first and second sheet members 114, 116.

The main part 112 comprises mounting means in the form of a mounting aperture 120 defined by the main part 112. The mounting aperture 120 is of a generally oval configuration, having a narrower upper region 121A and a wider lower region 121 B. The main part 112 has an external edge 117, and an internal edge 119. The mounting aperture 120 is defined by the internal edge 119. The first and second sheet members 114, 116 are welded to each other by welds at the edge region adjacent the outer edge 117 and by welds at the edge region adjacent the inner edge 119.

The mounting aperture 120 is a size that can enable the user to put their head through the mounting aperture 120 and carry the water holding vessel 110 around their neck.

The main part 112 comprises a cushioning region 122 which is isolated from the chamber 118 by sealed portions in the form of welds 124 extending from the outer edge 117 to the inner edge 119. The cushioning region 122 defines an inflation aperture 126 to which a valve and an inflation tube are mounted, to allow the cushioning region 122 to be inflated by the user by blowing through the inflation tube. This provides a comfortable support for the user when carrying the water holding vessel 110 full of water.

The first sheet member 114 defines an inlet aperture 128 arranged at the upper region 111A, adjacent to the cushioning region 122, and an outlet aperture 130 arranged at a lower region 111 B of the main part 112. A suitable inlet connector is provided at the inlet aperture 128, and a suitable closable outlet connector provided at the outlet aperture 130.

A mounting formation in the form of a hook arrangement 132 is provided, which can be mounted on a wall to support the water holding vessel 110. The hook arrangement 132 is shown in broken lines in Figure 4 and is wide to spread the weight of the water holding vessel 110, particularly when full of water, to prevent damage to the water holding vessel 110.

A hosepipe can be connected to the inlet connector at the inlet aperture 128 to supply rainwater to the water holding vessel 110. When the chamber 118 is sufficiently full of water, a hosepipe can be connected to the outlet connector.

The water holding vessel 110 can then be removed from the hook arrangement 132, arranged around the neck of the user, and the outlet connector can be opened to allow water to be dispensed from the hosepipe connected thereto, thereby allowing the user to water their garden.

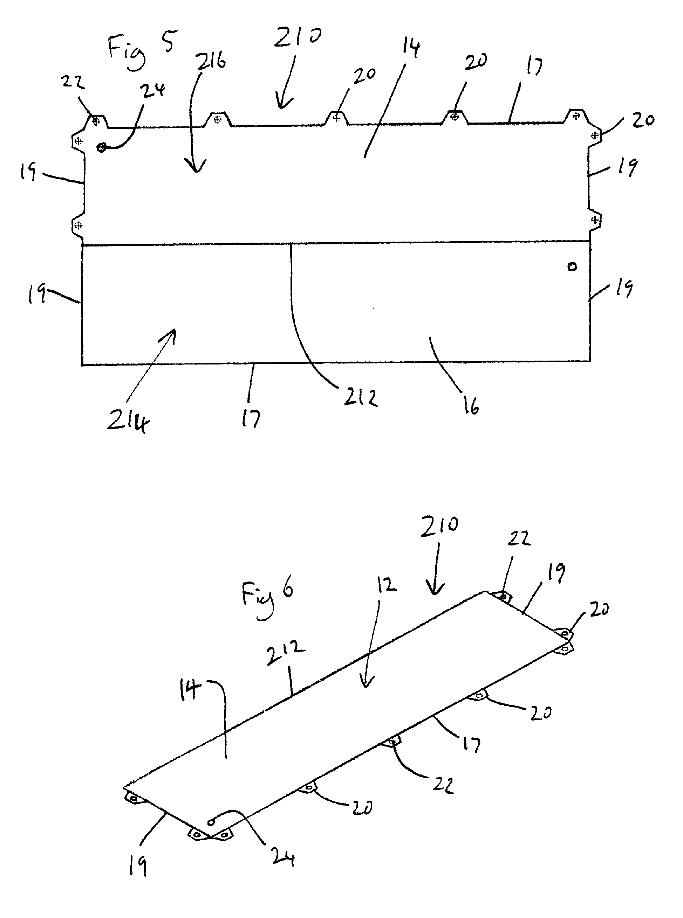

A third embodiment is shown in Figures 5 and 6, in which the features present in Figures 5 and 6 that are also present in Figures 1 to 3 are designated with the same reference numerals as in Figures 1 to 3.

The third embodiment differs from the first embodiment in that the third embodiment is a water holding vessel generally designated 210 that is formed of a single sheet 214 in which the first and second sheet members 14, 16 are integrally attached to each other by a fold line 212. The water holding vessel 210 is in the form of a water butt.

Figure 5 shows a blank 216 in the form of the single sheet 214. The water holding vessel 210 is formed from the blank 216 by folding the single sheet 214 about the fold line 212, and then welding the first and second sheet members to each other at their edge regions. The water holding vessel 210 so formed is shown in Figure 6.

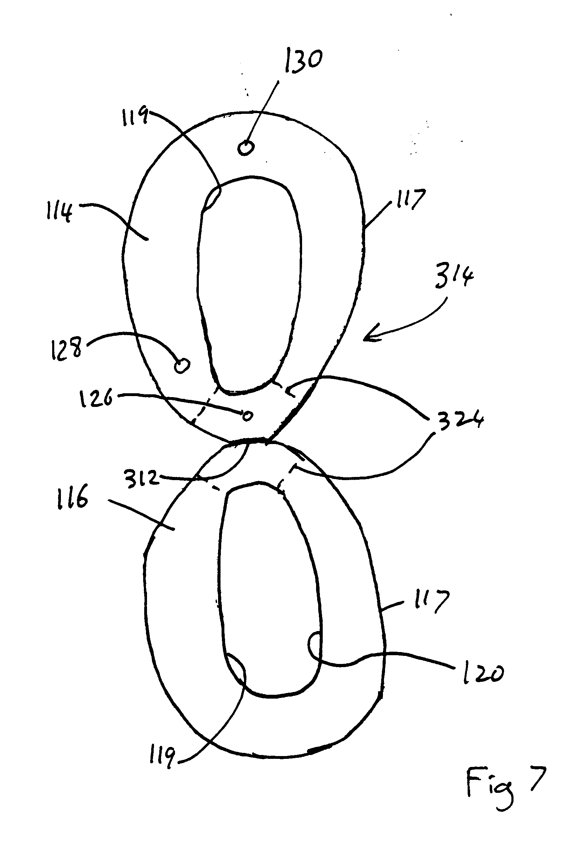

Figure 7 shows a fourth embodiment of a blank 316, also in the form of a single sheet 314, but differing from the embodiment shown in Figures 5 and 6, by being of a shape to form a water holding vessel of a configuration similar to the embodiment shown in Figure 4.

Some of the features present in the embodiment shown in Figure 7 are also present in Figure 4 are designated with the same reference numerals as in Figure 4. The fourth embodiment differs from the second embodiment in that the sheet members 114, 116 are integrally attached to each other by a fold line 312. The water holding vessel is formed from the blank 316 by folding the single sheet 314 about the fold line 312, and then welding the first and second sheet members to each other at their edges 117, and at the inner edges 119.

The sheet members 114, 116 are also welded to each other along weld lines 324 which extend from the inner edges 119 to provide the cushioning region 122, in the same way as shown in Figure 4.

The inlet aperture 128 and the outlet aperture 130 are provided in the same place in the water holding vessel formed from the blank 316 as in the water holding vessel 110 shown in Figure 4. The water holding vessel so formed from the blank 314 is generally the same as the water holding vessel 110 shown in Figure 4.

There is thus described four embodiments of a water holding vessel that allow rainwater to be collected and then dispensed for watering purposes, for example over a garden. In each embodiment, the water holding vessel has suitable features to allow it to be stored and then utilised for watering purposes.

Various modifications can be made without departing from the scope of the invention, for example, the specific shapes of the embodiments described herein could be varied.

## Claims

1. A water holding vessel comprising a main part comprising a flexible material, the main part defining, or being capable of defining, a chamber to hold the water, and mounting means to mount the vessel on a support.

2. A water holding vessel according to Claim 2, wherein the mounting means comprises a plurality of spaced mounting members arranged around an edge of the main body., and a plurality of mounting formations are provided on the support, at least some of the mounting members being cooperable with a corresponding number of mounting formations to mount the vessel on the support.

3. A water holding vessel according to Claim 2, wherein the mounting means comprises first mounting portions on the edge of the first sheet member, and second mounting portions on the edge of the second sheet member, the first and second sheet members being attached to each other so that the first mounting portions are aligned with respective second mounting portions and wherein each of the first and second mounting portions defines respective first and second mounting apertures, the first and second mounting portions being secured to each other such that the first and second mounting apertures are aligned with each other.

4. A water holding vessel according to Claim 2, wherein the mounting means comprises a plurality of mounting members arranged along the edge of one of the first and second sheet members.

5. A water holding vessel according to Claim 3 or 4, wherein at least some of the mounting members are spaced uniformly from adjacent mounting members.

6. A water holding vessel according to Claim 4 or 5, wherein the main part is rectangular in configuration, having a pair of opposed longer edges, and a pair of opposed shorter edges.

7. A water holding vessel according to Claim 6, wherein four of the mounting members are provided on each of the longer edges and two of the mounting members are provided on each of the shorter edges.

8. A water holding vessel according to any preceding Claim, wherein the main part comprises first and second opposed sheet members of the flexible material, the first and second sheet members being separable from each other to define the chamber to hold the water, the first and second sheet members being secured to each other along the edge regions by welding the first and second sheet members to each other along at least some of the edge regions, and the mounting means being provided along the edges of the first and second sheets members.

9. A water holding vessel according to any preceding Claim, wherein the main part defines an inlet opening, and an inlet connector is provided at the inlet opening, to which a water feed conduit can be communicatively connected, and wherein the main part defines an outlet opening spaced from the inlet opening, and an outlet connector is provided at the outlet opening, to which a water dispensing conduit can be communicatively connected, to allow water to be dispensed from the water holding vessel the inlet opening.

10. A water holding vessel according to Claim 1, wherein the mounting means is a mounting aperture extending through the main part, the mounting aperture being of a size to receive through it at least the head of a user, so that the user can carry the water holding vessel around the user's neck, and the main part comprises a cushioning region to cushion the head of the user of the water holding vessel when the user is carrying the water holding vessel around the user's neck.

11. A water holding vessel according to Claim 10, wherein the main part comprises a first region capable of defining the chamber to hold the water, and a second region isolated from the first region by sealed portions, the sealed portions extending across the main part, the second region comprising the cushioning region.

12. A water holding vessel according to Claim 11, wherein the second region is inflatable, and defines an inflation opening through which air to inflate the second region can pass, and an inflating member is provided on the inflation opening, the inflating member comprising a tube through which the user can blow to inflate the second region.

13. A water holding vessel according to Claim 12, wherein the main part comprises first and second opposed sheet members of the flexible material, the first and second sheet members being separable from each other to define the chamber to hold the water, and the first and second sheet members are attached to each other along the edge regions.

14. A water holding vessel according to any of Claims 10 to 13, wherein the main part defines an inlet opening defined in an upper region of the main part, and an inlet connector is provided at the inlet opening, to which a water feed conduit can be communicatively connected, and the main part defines an outlet opening defined in a lower region of the main part, and an outlet connector is provided at the outlet opening, to which a water dispensing conduit can be communicatively connected, to allow water to be dispensed from the water holding vessel.

15. A water holding vessel according to any of Claims 10 to 14, wherein the main part of the water holding vessel of the second embodiment is generally oval in configuration, the upper region of the main part being narrower than the lower region of the main part, and the mounting aperture is generally oval in configuration, the upper region of the aperture being narrower than the lower region of the aperture.
